# EUROPÄISCHE PATENTSCHRIFT

(11) **EP 2 669 083 B1**
(45) Veröffentlichungstag und Bekanntmachung des Hinweises auf die Patenterteilung: **13.03.2019**
(21) Anmeldenummer: 12170637.8
(22) Anmeldetag: 02.06.2012
(51) Int. Cl.: B32B 17/10, C03C 27/12, H05B 3/84, H01R 4/70, H02G 15/113, H02G 15/00, H01R 4/02

(54) **Verfahren zur Herstellung einer Anschlussbaugruppe eines Flächenkörpers**
Method for manufacturing a connection module of a panel
Procédé de fabrication d'un composant de raccordement d'une plaque

(43) Veröffentlichungstag der Anmeldung: 04.12.2013
(73) Patentinhaber: Saint-Gobain Glass France, 92400 Courbevoie (FR)
(72) Erfinder: Reul, Bernhard, 52134 Herzogenrath (DE); Ziegler, Stefan, 45549 Sprockhövel (DE); Schlarb, Andreas, 52134 Herzogenrath (DE)
(74) Vertreter: Gebauer, Dieter Edmund

(56) Entgegenhaltungen:
- EP-A1- 0 607 067
- EP-A1- 0 619 691
- EP-A1- 2 309 604
- EP-A2- 1 139 697
- DE-A1- 1 949 503
- DE-A1-102006 061 599
- DE-A1-102009 016 914
- JP-A- 7 106 014

## Beschreibung

Die Erfindung betrifft ein Verfahren zur Herstellung einer Anschlussbaugruppe eines Flächenkörpers mit wenigstens einem flächigen Substrat und wenigstens einer mit dem Substrat fest verbundenen, elektrisch leitfähigen Struktur, die mit der Anschlussbaugruppe elektrisch verbunden ist.

Es ist bekannt, gläserne Flächenkörper in Abhängigkeit von der gewünschten Anwendung mit elektrischen Einrichtungen auszurüsten. Ein Beispiel hierfür sind Fahrzeugscheiben mit einer elektrischen Scheibenheizung in Form dünner Heizdrähte oder einer transparenten elektrischen Heizschicht. In Kraftfahrzeugen werden sie typischer Weise als Windschutzscheiben eingesetzt, deren Sichtfeld aufgrund gesetzlicher Vorgaben nicht beeinträchtigt werden darf. Durch die von der Scheibenheizung erzeugte Wärme können binnen kurzer Zeit kondensierte Feuchtigkeit, Eis und Schnee entfernt werden. In Wohnräumen dienen gläserne Flächenkörper anstelle herkömmlicher Heizkörper zur Wohnraumheizung und werden zu diesem Zweck an Wänden oder frei stehend montiert. Bekannt ist auch deren Verwendung als heizbare Spiegel. In der Patentliteratur sind sie bereits vielfach beschrieben worden. Lediglich beispielhaft sei in diesem Zusammenhang auf die Druckschriften DE 102008018147 A1, DE 102008029986 A1 und DE 102004018109 B3 verwiesen.

In gläsernen Flächenkörpern mit elektrischer Heizeinrichtung wird der Heizstrom in der Regel durch streifen- bzw. bandförmige Elektroden ("Busbars") eingeleitet. Bei einer transparenten Heizschicht sollen die bandförmigen Elektroden den Heizstrom als Sammelleiter auf breiter Front verteilen. Eine Drahtheizung weist in der Regel eine Vielzahl über der Scheibe verteilt angeordneter Heizdrähte auf, die durch die bandförmigen Elektroden gleichzeitig mit der Heizspannung beaufschlagt werden können.

Ein weiteres Beispiel für gläserne Flächenkörper mit einer elektrischen Einrichtung sind Solarmodule, insbesondere Dünnschichtsolarmodule. Für einen elektrischen Außenanschluss zum Bereitstellen der durch die Solarzellen erzeugten Spannung weist jedes Solarmodul zwei Spannungsanschlüsse auf, zu welchem Zweck typischer Weise zwei wenigstens eine Elektrodenschicht der Solarzellen kontaktierende, bandförmige Sammelleiter vorgesehen sind.

Schließlich seien als noch weiteres Beispiel für gläserne Flächenkörper mit einer elektrischen Einrichtung Fahrzeugscheiben mit einer integrierten Antenne genannt. Bekannt ist es, eine transparente, leitfähige Schicht als flächenförmige Antenne und einen dünnen Metalldraht als Linienantenne zum Empfangen von elektromagnetischen Wellen einzusetzen. Derartige Fahrzeugscheiben sind dem Fachmann beispielsweise aus den Druckschriften DE 10106125 A1, DE 10319606 A1, EP 0720249 A2, US 2003/0112190 A1 und DE 19843338 C2 bekannt.

Wie insbesondere den genannten Druckschriften entnommen werden kann, werden gläserne Flächenkörper mit einer elektrischen Einrichtung typischer Weise in Form einer Verbundscheibe gefertigt, bei der zwei Einzelscheiben durch eine thermoplastische Klebefolie fest miteinander verbunden werden. Die elektrische Einrichtung wird meist auf eine der beiden Einzelscheiben aufgebracht, wobei aber auch Aufbauten bekannt sind, bei denen die elektrische Einrichtung auf die thermoplastische Klebefolie oder eine Trägerfolie aufgebracht wird, die dann ihrerseits mit den beiden Einzelscheiben verklebt wird.

Aus den genannten Beispielen wird ebenfalls deutlich, dass die elektrischen Einrichtungen von gläsernen Flächenkörpern häufig von bandförmigen Sammelleitern elektrisch kontaktiert werden. Die bandförmigen Sammelleiter werden beispielsweise im Siebdruckverfahren aufgedruckt. Bekannt ist es auch, hierfür vorgefertigte Metallfolienstreifen zu verwenden, die mit den elektrischen Einrichtungen beispielsweise durch Verlöten elektrisch verbunden werden.

Die bandförmigen Sammelleiter werden in der Regel jeweils von einem dünnen Folien- bzw. Flachbandleiter (Metallbändchen) elektrisch kontaktiert, der Teil einer Anschlussbaugruppe für einen elektrischen Außenanschluss des gläsernen Flächenkörpers ist. Grund hierfür ist der sehr schmale Zwischenraum zwischen den Einzelscheiben einer Verbundscheibe und gegebenenfalls die Notwendigkeit hohe elektrische Ströme zu tragen, die bei einer elektrischen Scheibenheizung beispielsweise in der Größenordnung von 20 bis 25 Ampere liegen können. Zur Vermeidung thermischer Probleme ist eine entsprechend große Leiterquerschnittsfläche erforderlich, welche mit einem Flachbandleiter einfach zu realisieren ist. Aber auch bei Fahrzeugscheiben mit integrierter Antennenfunktion hat es sich in der Praxis bewährt, die Antennensignale über dünne Folien- bzw. Flachbandleiter abzuleiten, welche die Antennenstrukturen oder damit gekoppelte Elektroden kontaktieren.

Jedoch sind Flachbandleiter in der Regel sehr viel teurer als Rundleiter und zudem ist deren Handhabung gegenüber Rundleitern deutlich erschwert. Insofern ist es insbesondere zur Überbrückung größerer Strecken sehr wünschenswert, einen an eine elektrische Struktur eines Flächenkörpers angeschlossenen Flachbandleiter mit einem Rundleiter elektrisch zu verbinden.

Die europäische Patentanmeldung EP 2309604 A1 zeigt eine Anschlussbaugruppe, welche in einem mit Silikon verfüllten Gehäuse aufgenommen ist.

Die deutsche Patentanmeldung DE 102006061599 A1 zeigt ein zweiteiliges Gehäuse, das zur luft- und wasserdichten Abschirmung einer elektrischen Struktur ein aus zwei Substanzen bestehendes Füllmaterial enthält. Das Füllmaterial jedes Gehäuseteils besteht aus einer der elektrischen Struktur anliegenden, inneren Schicht und einer als Druckspeicher wirkenden, äußeren elastischen Schicht. Beim Fügen der beiden Gehäuseteile können die beiden inneren Schichten miteinander verkleben, wobei durch die beiden äußeren Schichten ein mechanischer Druck ausgeübt wird.

Demgegenüber besteht die Aufgabe der vorliegenden Erfindung darin, eine technisch einfache und in der Serienfertigung kostengünstig zu realisierende Möglichkeit zur Verbindung eines Flachbandleiters mit einem Rundleiter in einer Anschlussbaugruppe eines gläsernen Flächenkörpers zur Verfügung zu stellen. Diese und weitere Aufgaben werden nach dem Vorschlag der Erfindung durch ein Verfahren zur Herstellung einer Anschlussbaugruppe eines Flächenkörpers, eine Anschlussbaugruppe eines Flächenkörpers, sowie durch einen Flächenkörper mit wenigstens einer Anschlussbaugruppe mit den Merkmalen der nebengeordneten Patentansprüche gelöst. Vorteilhafte Ausgestaltungen der Erfindung sind durch die Merkmale der Unteransprüche angegeben.

Erfindungsgemäß ist ein Verfahren zur Herstellung einer Anschlussbaugruppe eines Flächenkörpers mit wenigstens einem flächigen Substrat und wenigstens einer mit dem Substrat fest verbundenen, elektrisch leitfähigen Struktur gezeigt.

Bei dem Flächenkörper handelt es sich vorzugsweise um eine Verglasung, welche als Einscheibenglas mit einer Einzelscheibe oder als Verbundscheibe mit zwei durch eine thermoplastische Klebefolie fest miteinander verbundenen Einzelscheiben ausgebildet sein kann. Es versteht sich, dass die Einzelscheiben nicht zwangsläufig aus Glas bestehen müssen, sondern auch aus einem nicht-gläsernen Material, beispielsweise Kunststoff, bestehen können. Beispielsweise handelt es sich bei dem Flächenkörper um eine Verbundscheibe mit einer elektrischen Heizeinrichtung in Form einer transparenten elektrischen Heizschicht oder elektrischer Heizdrähte, welche über bandförmige Sammelleiter zum Anlegen einer Speisespannung verfügt. Eine andere beispielhafte Verkörperung ist ein in Form einer Verbundscheibe ausgebildetes Solarmodul, welches mit Sammelleitern zum Kontaktieren wenigstens einer Elektrodenschicht der miteinander verschalteten Solarzellen versehen ist. Denkbar ist aber auch, den Flächenkörper in Form eines Einscheibenglases oder einer Verbundscheibe mit einer integrierten Flächen- und/oder Linienantenne zum Empfangen von elektromagnetischer Strahlung zu verkörpern. Bei dem wenigstens einen flächigen Substrat des Flächenkörpers handelt es sich vorzugsweise um eine Einzelscheibe aus Glas oder einem nicht-gläsernen Material.

Wesentlich ist, dass der Flächenkörper über wenigstens eine elektrisch leitfähige Struktur verfügt, die für einen elektrischen Außenanschluss mit einer Anschlussbaugruppe elektrisch verbunden ist. Ist eine Mehrzahl elektrisch leitfähiger Strukturen vorgesehen, ist bzw. wird jede elektrisch leitfähige Struktur mit einer separaten Anschlussbaugruppe elektrisch leitend verbunden.

Die mit der elektrisch leitfähigen Struktur des Flächenkörpers verbundene Anschlussbaugruppe umfasst ein Flachbandkabel mit einem Flachbandleiter aus einem elektrisch leitfähigen Material, beispielsweise Metall, und einer den Flachbandleiter umgebenden Ummantelung aus einem elektrisch isolierenden Material, beispielsweise Kunststoff. Der Flachbandleiter ist an einem Ende mit einem ummantelungsfreien ersten Bandleiter-Anschlussabschnitt an die elektrisch leitfähige Struktur des Flächenkörpers elektrisch angeschlossen, beispielsweise durch eine Lötverbindung, und verfügt weiterhin an seinem anderen Ende über einen ummantelungsfreien zweiten Bandleiter-Anschlussabschnitt.

Im Sinne vorliegender Erfindung bezeichnet der Begriff "Flachbandleiter" einen band- bzw. streifenförmigen Leiter, beispielsweise eine Metallfolie, mit einer sehr geringen Schichtdicke beispielsweise im ein- oder zweistelligen Mikrometerbereich.

Die Anschlussbaugruppe umfasst weiterhin ein Rundkabel mit einem Rundleiter aus einem elektrisch leitfähigen Material, beispielsweise Metall, und einer den Rundleiter umgebenden Ummantelung aus einem elektrisch isolierenden Material, beispielsweise Kunststoff. Der Rundleiter ist an einem Ende mit einem ummantelungsfreien ersten Rundleiter-Anschlussabschnitt an den ummantelungsfreien zweiten Bandleiter-Anschlussabschnitt elektrisch angeschlossen, wodurch eine Anschlusszone gebildet wird. In der Regel verfügt das Rundkabel an seinem anderen Ende über einen zweiten Rundleiter-Anschlussabschnitt, der an ein Anschlusselement, beispielsweise ein elektrischer Stecker, angeschlossen ist.

Im Sinne vorliegender Erfindung bezeichnet der Begriff "Rundleiter" einen Leiter, der über einen runden Querschnitt senkrecht zu seiner Erstreckung verfügt.

Die Anschlussbaugruppe umfasst weiterhin einen Dichtmassenverbund, hergestellt aus einer Mehrzahl miteinander verschmolzener Dichtmassenportionen (Dichtmassenteile) einer selbstverschmelzenden Dichtmasse, in dem die Anschlusszone der beiden Kabel so eingebettet ist, dass sie gegenüber der äußeren Umgebung luft- und wasserdicht abgeschirmt ist. Der Dichtmassenverbund ist in einem umgebenden Anschlussgehäuse aufgenommen. Die Dichtmasse besteht aus einem (Polymer-)Material, welches geeignet ist, die Anschlusszone luft- und wasserdicht gegenüber der äußeren Umgebung abzuschirmen.

Im Sinne vorliegender Erfindung wird unter dem Begriff "selbstverschmelzend" eine solche Dichtmasse verstanden, welche geeignet ist, ohne Zugabe weiterer Stoffe eine Mehrzahl zunächst voneinander getrennter Dichtmassenportionen, welche in Berührungskontakt zueinander gebracht werden, zu einem größeren Dichtmassenverbund zu verschmelzen, wobei die Dichtmassenportionen im Dichtmassenverbund stoffschlüssig miteinander verbunden sind. Der Begriff "Dichtmassenverbund" bezieht sich dementsprechend auf eine Mehrzahl miteinander verschmolzener Dichtmassenportionen, welche nicht mehr individualisierbar sind.

Das erfindungsgemäße Verfahren zur Herstellung einer solchen Anschlussbaugruppe eines Flächenkörpers mit wenigstens einem flächigen Substrat und einer elektrisch leitfähigen Struktur umfasst die folgenden Schritte:
Einen Schritt, bei dem ein Flächenkörper bereit gestellt wird, wobei ein Flachbandleiter eines Flachbandkabels an die elektrisch leitfähige Struktur des Flächenkörpers elektrisch angeschlossen ist.

Einen Schritt, bei dem ein Rundleiter eines Rundkabels mit dem an die elektrisch leitfähige Struktur angeschlossenen Flachbandleiter elektrisch verbunden wird, wodurch eine Anschlusszone der beiden Kabel gebildet wird.

Einen Schritt, bei dem die Anschlusszone in einen von einem Anschlussgehäuse aufgenommenen Dichtmassenverbund zur luft- und wasserdichten Abschirmung der Anschlusszone von der äußeren Umgebung eingebettet wird, wobei der Dichtmassenverbund durch Zusammenbringen und Verschmelzen einer Mehrzahl voneinander getrennter Dichtmassenportionen einer selbstverschmelzenden Dichtmasse hergestellt wird.

Die Erfindung ermöglicht somit erstmals eine technisch einfache und kostengünstige Herstellung einer Anschlussbaugruppe eines Flächenkörpers der in Rede stehenden Art, wobei Flachband- und Rundleiter zuverlässig und sicher geschützt gegen äußere Einflüsse elektrisch miteinander verbunden werden. Ein besonderer Vorteil ergibt sich aus der Tatsache, dass der Flachbandleiter ohne angeschlossenen Rundleiter mit der elektrisch leitfähigen Struktur des Flächenkörpers elektrisch verbunden wird, so dass eine Prozessierung des Flächenkörpers nach Anschluss des Flachbandleiters an die elektrisch leitfähige Struktur des Flächenkörpers, jedoch vor Anschluss des Rundleiters an den Flachbandleiter, erfolgen kann. Insofern ist es nicht erforderlich, den Flachband- und Rundleiter bereits vor dem Anschluss des Flachbandleiters an die elektrische Struktur des Flächenkörpers elektrisch miteinander zu verbinden, was eine technisch aufwendigere und damit kostenintensivere Handhabung des Flächenkörpers durch das nicht fixierte, herunter hängende Rundkabel zur Folge hätte. Zudem stellt das Rundkabel und eine gegebenenfalls daran angebrachte weitere elektrische Anschlusseinrichtung eine nur schwierig zu reinigende Kontaminationsquelle für die in aller Regel in Reinräumen erfolgende Fertigung von Flächenkörpern (z.B. Verbundscheiben) dar, wodurch sich die Gefahr der Einschleusung von Staub und anderen Fremdstoffen und somit die Fehler- bzw. Ausschussquote erhöhen würde.

Bei einer vorteilhaften Ausgestaltung der Erfindung wird als Dichtmasse eine bei Raumtemperatur (ca. 20°C), d.h. ohne die Notwendigkeit einer zusätzlichen Wärmezufuhr, selbstverschmelzende Dichtmasse eingesetzt. Der Dichtmassenverbund zum Einbetten der Anschlusszone kann somit in vorteilhafter Weise durch bloße Kontaktherstellung zwischen den Dichtmassenportionen erfolgen. Ein Beispiel für eine solche selbstverschmelzende Dichtmasse ist eine auf Butyl basierende Dichtmasse (z.B. Butylkautschuk). Diese Maßnahme ermöglicht ein besonders einfaches und kostengünstiges Einbetten der Anschlusszone in den Dichtmassenverbund. Gleichwohl schließt dies nicht aus, dass die Dichtmassenportionen zum Verschmelzen geringfügig erwärmt werden, beispielsweise auf eine Temperatur von ca. 30°C, um die Kinetik des Verschmelzungsvorgangs zu beeinflussen.

Denkbar ist aber auch, dass eine Dichtmasse eingesetzt wird, bei welcher der Verschmelzungsvorgang grundsätzlich eine Temperaturerhöhung der Dichtmasse erfordert, beispielsweise auf eine Temperatur oberhalb von 100°C. Beispiele für eine solche selbstverschmelzende Dichtmasse sind Ethylenvinylacetat (EVA), Polyvinylbutyral (PVB), Polyethylen (PE), Polyethylenacrylcopolymer oder Polyacrylamid (PA).

Bei dem erfindungsgemäßen Verfahren wird das Anschlussgehäuse aus einer Mehrzahl Gehäuseteile zusammengebaut, wobei in den Gehäuseteilen jeweils eine Dichtmassenportion so aufgenommen ist, dass die Dichtmassenportionen im zusammengebauten Anschlussgehäuse zum Dichtmassenverbund verschmelzen können. Diese Maßnahme ermöglicht ein besonders einfaches und kostengünstiges Einbetten der Anschlusszone der beiden Kabel in den Dichtmassenverbund, welches in der Serienfertigung in einfacher Weise automatisiert werden kann.

In verfahrenstechnischer Hinsicht ist es von Vorteil, wenn die Dichtmassenportionen in den Gehäuseteilen so aufgenommen sind, dass sie beim Zusammenbau des Anschlussgehäuses selbsttätig in Berührungskontakt gelangen, so dass die Dichtmassenportionen bei einer bei Raumtemperatur selbstverschmelzenden Dichtmasse zum Dichtmassenverbund verschmelzen. Das Einbetten der Anschlusszone kann somit in einfacher Weise kostengünstig in automatisierter Form erfolgen. Erfindungsgemäß werden die Dichtmassenportionen in den Gehäuseteilen erst durch elastisches Verformen des Anschlussgehäuses durch Anwenden einer äußeren mechanischen Kraft miteinander in Berührungskontakt gebracht.

Bei einer durch Erwärmung selbstverschmelzenden Dichtmasse kann eine Kontaktherstellung der räumlich voneinander getrennten Dichtmassenportionen gegebenenfalls auch durch ein Ineinanderfließen der Dichtmassenportionen infolge einer mit Temperaturerhöhung einher gehenden verringerten Viskosität der Dichtmasse erfolgen.

Bei einer alternativen Ausgestaltung, welche nicht Teil des erfindungsgemäßen Verfahrens ist, wird die Anschlusszone durch eine Öffnung in ein einteiliges Anschlussgehäuse eingebracht, wobei eine Mehrzahl Dichtmassenportionen im Anschlussgehäuse räumlich voneinander getrennt so angeordnet ist, dass die Dichtmassenportionen miteinander zum Dichtmassenverbund verschmelzen können. Zu diesem Zweck werden die Dichtmassenportionen beispielsweise durch elastisches Verformen des Anschlussgehäuses in Berührungskontakt gebracht, so dass die Dichtmassenportionen bei einer bei Raumtemperatur selbstverschmelzenden Dichtmasse verschmelzen. Von Vorteil ist es, wenn
vor dem Verschmelzen der Dichtmassenportionen wenigstens ein die Dichtmassenportionen voneinander trennendes Trennorgan, beispielsweise ein Trennpapier, entfernt wird, so dass ein vorzeitiges Verschmelzen der Dichtmassenportionen vermieden wird und eine positionsgenaue Lagerung der Anschlusszone innerhalb des Anschlussgehäuses problemlos möglich ist. Bei einer durch Temperaturerhöhung selbstverschmelzenden Dichtmasse kann eine Kontaktherstellung der voneinander getrennten Dichtmassenportionen auch durch ein Ineinanderfließen infolge einer mit Temperaturerhöhung einher gehenden verringerten Viskosität der Dichtmasse erfolgen.

Bei einer weiteren vorteilhaften Ausgestaltung des erfindungsgemäßen Verfahrens werden die Dichtmassenportionen vor dem Verschmelzen zum Dichtmassenverbund mit dem Anschlussgehäuse fest verbunden. Durch diese Maßnahme kann in vorteilhafter Weise eine Vorfixierung der ansonsten lose im Anschlussgehäuse bzw. in den Gehäuseteilen aufgenommenen Dichtmassenportionen insbesondere bei einer erst durch Temperaturerhöhung verschmelzenden Dichtmasse erreicht werden, so dass die Anschlusszone zielgenau zum Zweck einer luft- und wasserdichten Einbettung positionierbar ist.

Bei einer weiteren vorteilhaften Ausgestaltung des erfindungsgemäßen Verfahrens wird eine im Anschlussgehäuse angeordnete Ummantelung des Flachbandkabels und eine im Anschlussgehäuse angeordnete Ummantelung des Rundkabels in den Dichtmassenverbund eingebettet. Durch diese Maßnahme kann eine Verstärkung der mechanischen Verbindung der beiden Kabel im Bereich der Anschlusszone erreicht werden.

Bei einer weiteren vorteilhaften Ausgestaltung des erfindungsgemäßen Verfahrens wird das Anschlussgehäuse an der Ummantelung des Flachbandkabels und/oder an der Ummantelung des Rundkabels befestigt, wodurch eine (weitere) Verstärkung der mechanischen Verbindung der beiden Kabel im Bereich der Anschlusszone erreicht wird.

Bei einer weiteren vorteilhaften Ausgestaltung des erfindungsgemäßen Verfahrens werden das Flachbandkabel und/oder das Anschlussgehäuse am flächigen Substrat des Flächenkörpers befestigt. Auch durch diese Maßnahme kann eine (weitere) Verstärkung der mechanischen Verbindung der beiden Kabel im Bereich der Anschlusszone erreicht werden.

Die Erfindung erstreckt sich weiterhin auf eine wie oben beschrieben ausgebildete Anschlussbaugruppe eines Flächenkörpers mit wenigstens einem flächigen Substrat und wenigstens einer mit dem Substrat fest verbundenen, elektrisch leitfähigen Struktur, welche mit der Anschlussbaugruppe elektrisch verbunden ist.

Wie bereits ausgeführt, ist das Anschlussgehäuse aus einer Mehrzahl miteinander verbundener Gehäuseteile aufgebaut, wobei in jedem Gehäuseteil eine Dichtmassenportion enthalten ist, die mit wenigstens einer weiteren Dichtmassenportion, welche in einem anderen Gehäuseteil enthalten ist, zum Dichtmassenverbund verschmolzen ist.

Erfindungsgemäß besteht das Anschlussgehäuse aus einem elastisch verformbaren Material, so dass die Dichtmassenportionen durch Verformen des Anschlussgehäuses infolge des Ausübens einer äußeren mechanischen Kraft in Berührungskontakt gebracht werden können.

Vorteilhaft ist das Anschlussgehäuse an den Ummantelungen des Flachband- und Rundkabels befestigt, wobei neben einer verbesserten mechanischen Stabilität der Verbindung der Kabel im Bereich der Anschlusszone durch ein kapselndes Anschlussgehäuse eine verbesserte Abschirmung der Anschlusszone vor äußeren Einflüssen erreicht werden kann.

Vorteilhaft sind das Anschlussgehäuse und/oder das Flachbandkabel am Substrat befestigt, wodurch eine weitere Verbesserung der mechanischen Stabilität der Anschlusszone von Flachband- und Rundkabel erreicht werden kann.

Ferner erstreckt sich die Erfindung auf einen Flächenkörper mit wenigstens einem flächigen Substrat und wenigstens einer mit dem Substrat fest verbundenen, elektrisch leitfähigen Struktur, die mit einer wie oben beschrieben ausgebildeten Anschlussbaugruppe elektrisch verbunden ist. Vorzugsweise handelt es sich bei dem Flächenkörper um ein Einscheibenglas oder eine Verbundscheibe mit einer oder mehreren elektrisch leitfähigen Strukturen, wie bandförmige Sammelleiter oder flächen-/linienförmige Antennenleiter.

Es versteht sich, dass die vorstehend genannten und nachstehend zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Die Erfindung wird nun anhand von Ausführungsbeispielen näher erläutert, wobei Bezug auf die beigefügten Figuren genommen wird. Es zeigen in vereinfachter, nicht maßstäblicher Darstellung:

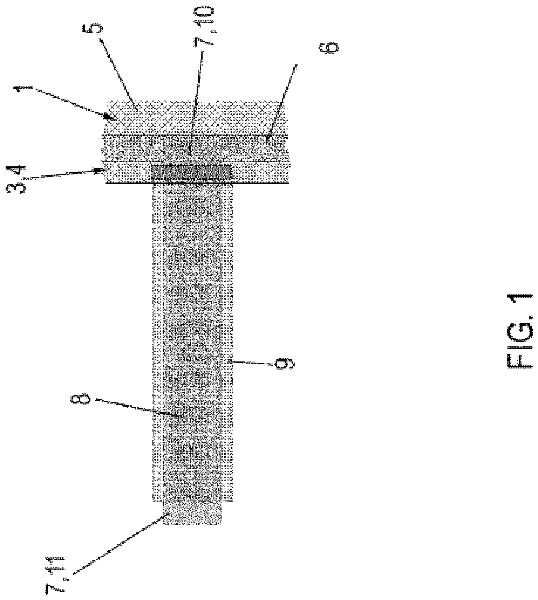

- Fig. 1-4: schematische Ansichten zur Veranschaulichung eines beispielhaften Verfahrens zur Herstellung der Anschlussbaugruppe des Sammelleiters einer Verbundscheibe mit Heizdrähten.

### Ausführliche Beschreibung der Zeichnungen

Sei zunächst Figur 1 betrachtet, worin eine insgesamt mit der Bezugszahl 1 bezeichnete Verbundscheibe (in der Beschreibungseinleitung als "Flächenkörper" bezeichnet) in Draufsicht gezeigt ist. Bei der Verbundscheibe 1 handelt es sich beispielsweise um eine transparente Windschutzscheibe eines Kraftfahrzeugs, wobei es sich gleichermaßen beispielsweise um einen Flächenheizkörper zur Wohnraumheizung handeln könnte.

Die Verbundscheibe 1 umfasst zwei starre Einzelscheiben, nämlich eine Außenscheibe 3 und eine Innenscheibe 4, welche in Fig. 1 nicht näher dargestellt sind. Die beiden Einzelscheiben 3, 4 sind durch eine thermoplastische Klebefolie 5, beispielsweise eine Polyvinylbutyralfolie (PVB), Ethylen-Vinyl-Acetat-Folie (EVA) oder Polyurethanfolie (PU), fest miteinander verbunden. Die beiden Einzelscheiben 3, 4 sind beispielsweise aus Glas gefertigt, wobei sie gleichermaßen auch aus einem nichtgläsernen Material wie Kunststoff hergestellt sein können. Für andere Anwendungen wie als Windschutzscheibe wäre es auch möglich, die beiden Einzelscheiben 3, 4 aus einem flexiblen Material herzustellen. Da dem Fachmann der grundsätzliche Aufbau einer Verbundscheibe 1 wohlbekannt ist, beispielsweise aus den eingangs genannten Druckschriften, erübrigt es sich hierauf näher einzugehen.

In der Verbundscheibe 1 ist auf der Klebefolie 5 eine elektrische Scheibenheizung angeordnet, die beispielsweise in Form einer Mehrzahl Heizdrähte (nicht gezeigt) ausgeführt ist. Denkbar wäre auch, anstelle von Heizdrähten eine transparente elektrische Heizschicht vorzusehen. Bei den Heizdrähten handelt es sich beispielsweise um dünne Wolframdrähte, die nebeneinander liegend sich jeweils vom oberen zum unteren Scheibenrand erstrecken. Die Heizdrähte werden an einem Ende von einem band- bzw. streifenförmigen Sammelleiter 6 (in der Beschreibungseinleitung als "elektrisch leitfähige Struktur" bezeichnet) gemeinsam elektrisch kontaktiert, so dass sie mit einer Speisespannung beaufschlagt werden können. Ein entsprechender Sammelleiter befindet sich am anderen Ende der Heizdrähte, welcher in Fig. 1 nicht dargestellt ist.

Für die Herstellung einer mit dem Sammelleiter 6 elektrisch verbundenen Anschlussbaugruppe 2 wird ein Flachbandleiter 7 eines Flachbandkabels 8 mit dem Sammelleiter 6 elektrisch verbunden. Das Flachbandkabel 8 umfasst neben dem Flachbandleiter 7 eine den Flachbandleiter 7 umgebende, elektrisch isolierende Bandleiterummantelung 9. Zu diesem Zweck verfügt das Flachbandkabel 8 an einem Ende über einen ummantelungsfreien ersten Bandleiter-Anschlussabschnitt 10, mit dem der Flachbandleiter 7 an den Sammelleiter 6 beispielsweise durch eine Lötverbindung elektrisch angeschlossen ist. Am anderen Ende verfügt das Flachbandkabel 8 über einen ummantelungsfreien, zweiten Bandleiter-Anschlussabschnitt 11.

Der Flachbandleiter 7 besteht aus einer dünnen Metallfolie, beispielsweise aus Kupfer, Aluminium, Messing, Kupfer-Nickel, Neusilber, Silber oder Gold. Die Bandleiterummantelung 9 besteht aus Kunststoff, beispielsweise Polyimid (PI), Polyethylennaphthalat (PEN), Polyethersulfon (PES), Polyetherimid (PEI), Polyethylenetherketon (PEEK), Polyethylen (PE), Polyethylenterephthalat (PET), Polyvinylchlorid (PVC), Polypropylen (PP) oder Aramidfasern. Die Bandleiterummantelung 9 ist durch einen Klebstoff, beispielsweise ein Heißschmelzkleber oder ein drucksensitiver Klebstoff, am Flachbandleiter 7 befestigt. Bei koextrudierten Flachbandkabeln 8 ist ein Klebstoff nicht erforderlich. Die Schichtdicke des Flachbandleiters 7 liegt im ein- oder zweistelligen Mikrometerbereich. Die Abmessungen des Flachbandleiters 7 senkrecht zur Schichtdicke sind sehr viel größer, wobei dessen Breite typischer Weise im einstelligen Millimeter- oder einstelligen Zentimeterbereich und dessen in Erstreckungsrichtung sich bemessende Länge im ein- oder zweistelligen Zentimeterbereich liegt.

Bei der Herstellung der Verbundscheibe 1 wird nach dem Aufbringen der Heizdrähte auf die Klebefolie 5 zunächst der Flachbandleiter 7 an den auf der Klebefolie 5 angeordneten Sammelleiter 6 gelötet und anschließend die Klebefolie 5 zwischen die beiden Einzelscheiben 3, 4 eingelegt. Daraufhin wird ein so genannter Vorverbund hergestellt, wobei eine Entlüftung durch Laminieren, Vakuumsäcke oder einen Vakuumring erfolgt. Anschließend wird zum festen Verbinden der Einzelscheiben 3, 4 ein Autoklavierprozess durchgeführt, gefolgt von einem Kantenschleifen der Verbundscheibe 1 und einer Endkontrolle.

Figur 1 zeigt die Verbundscheibe 1 in einer Prozessphase nach dem Kantenschleifen bzw. Endkontrolle, in der die Verbundscheibe 1 für sich genommen bereits fertig prozessiert und nur noch die Fertigmontage der Anschlussbaugruppe 2 erfolgt. In dieser Situation ist der Flachbandleiter 7 mit dem Sammelleiter 6 verlötet und tritt zwischen den beiden Einzelscheiben 3, 4 aus der Verbundscheibe 1 heraus.

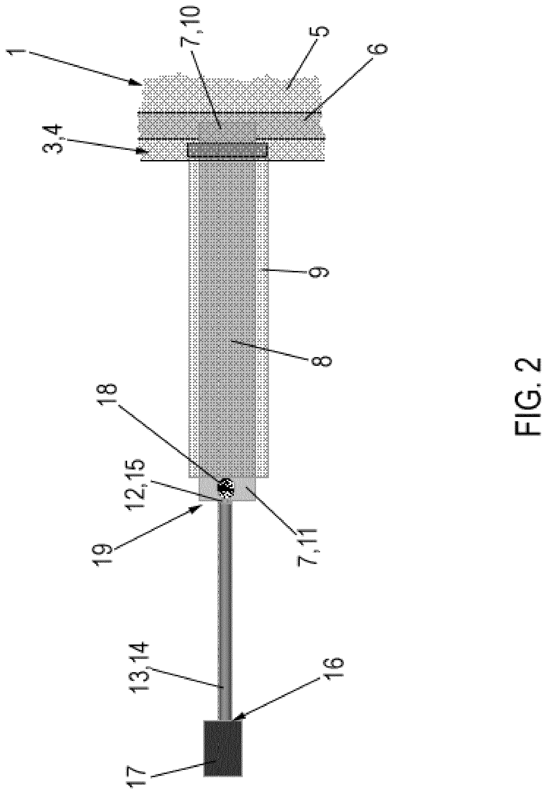

In Figur 2 ist eine spätere Prozessphase gezeigt, bei der ein Rundleiter 12 mit dem Flachbandleiter 7 elektrisch verbunden ist. Der Rundleiter 12 wird zu diesem Zweck an einem Ende mit einem ummantelungsfreien ersten Rundleiter-Anschlussabschnitt 15 an den zweiten Bandleiter-Anschlussabschnitt 11 angelötet. Die Lötverbindung 18, der erste Rundleiter-Anschlussabschnitt 15 und der zweite Bandleiter-Anschlussabschnitt 11 formen gemeinsam eine ummantelungsfreie Anschlusszone 19. Am anderen Ende verfügt der Rundleiter 12 über einen zweiten Rundleiter-Anschlussabschnitt 16, der an einen Stecker 17 angeschlossen ist.

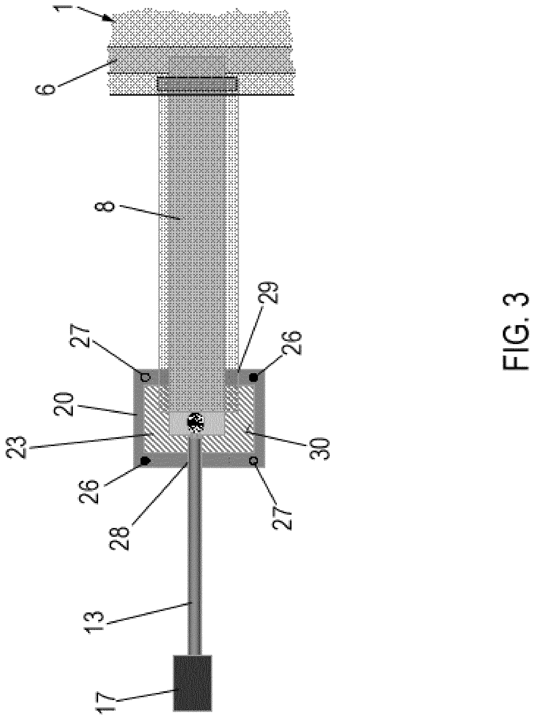

In Figur 3 ist eine noch spätere Prozessphase gezeigt. Hier wird eine erste (z.B. untere) Halbschale 20 für ein Anschlussgehäuse 22 im Bereich der Anschlusszone 19 in Stellung gebracht. Zu diesem Zweck wird das Flachbandkabel 8 auf der einen Seite in eine in Passform ausgebildete Flachbandkabelausnehmung 29, das Rundkabel 13 auf der anderen Seite in eine in Passform ausgebildete Rundkabelausnehmung 28 eingefügt. Hierbei kommt die Anschlusszone 19 in einer im Hohlraum 30 aufgenommenen ersten Dichtmassenportion 23 einer selbstverschmelzenden Dichtmasse zu liegen, wobei beim Einfügen der beiden Kabel 8, 13 in die entsprechenden Ausnehmungen 28, 29 die Anschlusszone 19 etwas in die erste Dichtmassenportion 23 eingedrückt wird.

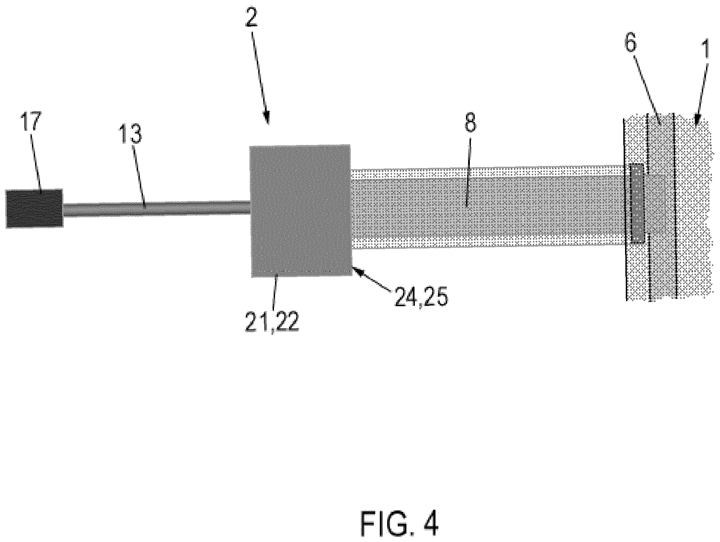

Wie in Figur 4 gezeigt, wird anschließend eine zweite (z.B. obere) Halbschale 21 auf die erste Halbschale 20 aufgesetzt, wodurch das kastenförmige Anschlussgehäuse 22 gebildet wird. Die zweite Halbschale 21 ist analog zur ersten Halbschale 20 aufgebaut und weist gleichermaßen einen Hohlraum auf, in dem eine (in Figur 4 nicht näher dargestellte) zweite Dichtmassenportion 24 enthalten ist. Dementsprechend verfügt die zweite Halbschale 21 auf der einen Seite über eine Flachbandkabelausnehmung zum Einfügen des Flachbandkabels 8 und auf der anderen Seite eine Rundkabelausnehmung zum Einfügen des Rundkabels 13. Falls die beiden Kabelausnehmungen 28, 29 der ersten Halbschale 20 entsprechend groß bemessen sind, erübrigt es sich, in der zweiten Halbschale 21 Kabelausnehmungen vorzusehen.

Eine Arretierung der beiden Halbschalen 20, 21 erfolgt hier beispielsweise durch konische Steckstifte 26 und in Passform ausgebildete Stiftlöcher 27 (in Figur 3 erkennbar), die jeweils an den Ecken der Halbschalen 20, 21 angeordnet sind und beim Aufsetzen der zweiten Halbschale 21 auf die erste Halbschale 20 in Eingriff gelangen. Eine automatisierte Montage des Anschlussgehäuses 22 ist durch diese Art von Arretierung in einfacher Weise realisierbar. Es versteht sich, dass anstelle von Steckverbindungen eine andere Befestigungstechnik eingesetzt werden kann, beispielsweise eine Verklebung der Halbschalen 20, 21.

Beim Aufsetzen der zweiten Halbschale 21 auf die erste Halbschale 20 wird die Anschlusszone 19 etwas in die zweite Dichtmassenportion 23 in der zweiten Halbschale 21 eingedrückt.

Die beiden Dichtmassenportionen 23, 24 bestehen hier beispielsweise aus einer bei Raumtemperatur selbstverschmelzenden Dichtmasse auf Basis von Butyl (Butylkautschuk). Bei einer solchen Dichtmasse haben die Dichtmassenportionen 23, 24 in der Regel eine feste Konsistenz, sind somit nicht fließfähig. Die beiden Dichtmassenportionen 23, 24 sind in der jeweiligen Halbschale 20, 21 so angeordnet, dass sie, wenn die zweite Halbschale 21 auf die erste Halbschale 20 aufgesetzt wird, in Berührungskontakt gelangen und selbsttätig zu einem Dichtmassenverbund 25 verschmelzen, in dem die Anschlusszone 19 luft- und wasserdicht eingebettet ist. Vor dem Verschmelzen der beiden Dichtmassenportionen 23, 24 sind die Dichtmassenportionen 23, 24 typischer Weise an den Halbschalen 20, 21 angeklebt, d.h. stoffschlüssig mit den Halbschalen 20, 21 verbunden. Um den Verschmelzungsvorgang der beiden bei Raumperatur (ca. 20°C) selbstverschmelzenden Dichtmassenportionen 23, 24 zu beschleunigen, ist es von Vorteil, die beiden Dichtmassenportionen 23, 24 geringfügig zu erwärmen, beispielsweise auf eine Temperatur von ca. 30°C.

Wie insbesondere in Figur 3 erkennbar, sind die beiden Halbschalen 20, 21 so dimensioniert, dass nicht nur die ummantelungsfreie Anschlusszone 19 sondern auch jeweils ein mit der isolierenden Ummantelung 9, 14 versehener Abschnitt des Flachbandkabels 8 bzw. Rundkabels 13 innerhalb des Anschlussgehäuses 22 bzw. der Dichtmassenportionen 23, 24 zu liegen kommt. Durch diese Maßnahme kann eine gute Haftung des Dichtmassenverbunds 25 an der an die Anschlusszone 19 angrenzende Rundleiterummantelung 14 bzw. Bandleiterummantelung 9 erzielt werden, wodurch die mechanische Stabilität des Kabelübergangs verbessert wird.

Das Anschlussgehäuse 22 besteht aus Kunststoff, beispielsweise Polyimid (PI). Die beiden Halbschalen 20, 21 sind beispielsweise im Spritzgussverfahren hergestellt. Die Wandstärke des Anschlussgehäuses 22 kann so gewählt sein, dass dessen Wände elastisch verformbar sind, so dass die Herstellung eines Berührungskontakts zwischen den beiden Dichtmassenportionen 23, 24, falls erforderlich, durch Aufeinanderdrücken der Dichtmassenportionen 23, 24 unterstützt werden kann.

Anstelle einer bei Raumtemperatur selbstverschmelzenden Dichtmasse könnte alternativ eine Dichtmasse eingesetzt werden, bei welcher ein Verschmelzen der Dichtmassenportionen erst durch eine Temperaturerhöhung, beispielsweise auf eine Temperatur oberhalb von ca. 100°C, ausgelöst wird. Als Dichtmasse könnte beispielsweise Ethylenvinylacetat (EVA), Polyvinylbutyral (PVB), Polyethylen (PE), Polyethylenacrylcopolymer oder Polyacrylamid (PA) eingesetzt werden. In diesem Fall wäre nach dem Zusammenbau des Anschlussgehäuses 22 zwingend ein Schritt zum Erwärmen der beiden Dichtmassenportionen 23, 24 vorzusehen. Vor dem Erwärmen haben die beiden Dichtmassenportionen 23, 24 in der Regel eine feste Konsistenz und sind nicht fließfähig. Im Unterschied zu einer bei Raumtemperatur selbstverschmelzenden Dichtmasse könnte eine Kontaktherstellung der Dichtmassenportionen 23, 24 nach Erwärmen gegebenenfalls auch durch ein Ineinanderfließen der Dichtmassenportionen 23, 24 erfolgen.

Typischer Weise sind die beiden Dichtmassenportionen 23, 24 einer solchen Dichtmasse vor dem Verschmelzen mit den Halbschalen 20, 21 lose verbunden, da die klebende Wirkung erst bei Temperaturerhöhung eintritt. Insofern kann es vorteilhaft sein, die beiden Dichtmassenportionen 23, 24 mit den Halbschalen 20, 21 fest zu verbinden, beispielsweise durch Ankleben mittels doppelseitiger Klebebänder. Durch diese Maßnahme kann erreicht werden, dass die Anschlusszone 19 durch die vorfixierten Dichtmassenportionen 23, 24 genau platzierbar ist. Andererseits sind die Dichtmassenportionen 23, 24 verliersicher an den Halbschalen 20, 21 angebracht.

Obgleich nicht dargestellt, wäre es in der Anschlussbaugruppe 2 möglich, das Anschlussgehäuse 22 und/oder das Flachbandkabel 8 an der Verbundscheibe 1 zu befestigen, beispielsweise durch einen Klebstoff, wodurch eine Verbesserung der mechanischen Stabilität des Kabelübergangs erreicht werden kann.

Es versteht sich, dass für jeden Sammelleiter der Verbundscheibe 1 eine separate Anschlussbaugruppe 2 vorgesehen ist.

Das Verfahren ermöglicht eine technisch einfache und kostengünstige Herstellung der Anschlussbaugruppe 2 der Verbundscheibe 1 in der automatisierten Serienfertigung. Wie in Verbindung mit Figur 1 erläutert wurde, kann der Flachbandleiter 7 ohne Rundkabel 13 an den Sammelleiter 6 angeschlossen werden, so dass die genannte Schritte zur Prozessierung der Verbundscheibe 1 ohne angeschlossenes Rundkabel 13 durchgeführt werden. Insofern besteht ein geringerer Platzbedarf in der gesamten Produktionskette der Verbundscheibe 1, da für den Vorverbund eine passgenaue Stapelung möglich ist. Bei angeschlossenem Rundkabel 13 wäre nur eine versetzte Stapelung möglich. Konkret kann für den Autoklavierprozess und diverse Transportvorgänge eine höhere Stückzahl pro Gestell vorgesehen werden. Zudem ist generell die Automatisierung des Herstellungsprozesses vereinfacht, insbesondere das Einlegen der Klebefolie 5 zwischen die beiden Einzelscheiben 3, 4, da das nicht fixierte, meist lange Rundkabel 13 eine besondere Handhabung erfordern würde. Zudem kann ein Einschleusen von Staub und anderen Fremdstoffen durch das Rundkabel 13 und den daran befestigten Stecker 17 vermieden werden, so dass die Verbundscheibe 1 mit weniger Innenfehler herstellbar ist (verringerte Ausschussquote). Für den Fall, dass eine Verbundscheibe 1 als Ausschuss gewertet wird, reduzieren sich die Kosten pro Verbundscheibe 1, da noch kein Rundkabel 13 verbraucht wurde. Die Anschlussbaugruppe 2 an der Verbundscheibe 1 kann somit mit vergleichsweise geringen Kosten und einem niedrigen Logistikaufwand in der Serienfertigung automatisiert hergestellt werden.

### Bezugszeichenliste

- 1: Verbundscheibe
- 2: Anschlussbaugruppe
- 3: Außenscheibe
- 4: Innenscheibe
- 5: Klebefolie
- 6: Sammelleiter
- 7: Flachbandleiter
- 8: Flachbandkabel
- 9: Bandleiterummantelung
- 10: erster Bandleiter-Anschlussabschnitt
- 11: zweiter Bandleiter-Anschlussabschnitt
- 12: Rundleiter
- 13: Rundkabel
- 14: Rundleiterummantelung
- 15: erster Rundleiter-Anschlussabschnitt
- 16: zweiter Rundleiter-Anschlussabschnitt
- 17: Stecker
- 18: Lötverbindung
- 19: Anschlusszone
- 20: erste Halbschale
- 21: zweite Halbschale
- 22: Anschlussgehäuse
- 23: erste Dichtmassenportion
- 24: zweite Dichtmassenportion
- 25: Dichtmassenverbund
- 26: Steckstift
- 27: Stiftloch
- 28: Rundkabelausnehmung
- 29: Flachbandkabelausnehmung
- 30: Hohlraum

## Patentansprüche

1. Verfahren zur Herstellung einer Anschlussbaugruppe (2) eines Flächenkörpers (1), welches die folgenden Schritte umfasst:
- Bereitstellen eines Flächenkörpers (1) mit wenigstens einem flächigen Substrat (3, 4) mit wenigstens einer mit dem Substrat (3, 4) fest verbundenen, elektrisch leitfähigen Struktur (6), an die ein Flachbandleiter (7) eines Flachbandkabels (8) elektrisch angeschlossen ist,
- elektrisches Verbinden eines Rundleiters (12) eines Rundkabels (13) mit dem an die elektrisch leitfähige Struktur (6) angeschlossenen Flachbandleiter (7) zur Formung einer Anschlusszone (19),
**gekennzeichnet durch**
- Einbetten der Anschlusszone (19) in einen von einem Anschlussgehäuse (22) umgebenen Dichtmassenverbund (25) zur luft- und wasserdichten Abschirmung der Anschlusszone (19) von der Umgebung, wobei der Dichtmassenverbund (25) durch Zusammenbringen und Verschmelzen einer Mehrzahl voneinander getrennter Dichtmassenportionen (23, 24) einer selbstverschmelzenden Dichtmasse hergestellt wird,
wobei in Gehäuseteilen (20, 21) des Anschlussgehäuses (22) jeweils eine Dichtmassenportion (23, 24) so aufgenommen ist, dass die Dichtmassenportionen (23, 24) im zusammengesetzten Anschlussgehäuse (22) zum Dichtmassenverbund (25) verschmelzen können, wobei
die Dichtmassenportionen (23, 24) in den Gehäuseteilen (20, 21) durch elastisches Verformen des Anschlussgehäuses (22) infolge des Ausübens einer äußeren mechanischen Kraft in Berührungskontakt gebracht werden.

2. Verfahren nach Anspruch 1, bei welchem die Dichtmassenportionen (23, 24) bei Raumtemperatur miteinander verschmolzen werden.

3. Verfahren nach Anspruch 1, bei welchem die Dichtmassenportionen (23, 24) durch Erwärmung, beispielsweise auf eine Temperatur oberhalb von 100°C, miteinander verschmolzen werden.

4. Verfahren nach einem der Ansprüche 1 bis 3, bei welchem die Dichtmassenportionen (23, 24) vor dem Verschmelzen zum Dichtmassenverbund (25) mit dem Anschlussgehäuse (22) fest verbunden werden.

5. Verfahren nach einem der Ansprüche 1 bis 4, bei welchem eine im Anschlussgehäuse (22) angeordnete Ummantelung (9) des Flachbandkabels (8) und eine im Anschlussgehäuse (22) angeordnete Ummantelung (14) des Rundkabels (13) in den Dichtmassenverbund (25) eingebettet wird.

6. Verfahren nach einem der Ansprüche 1 bis 5, bei welchem das Flachbandkabel (8) und/oder das Anschlussgehäuse (22) am Substrat (3, 4) befestigt werden.

7. Anschlussbaugruppe (2) eines Flächenkörpers (1) mit wenigstens einem flächigen Substrat (3, 4) und wenigstens einer mit dem Substrat (3, 4) fest verbundenen, elektrisch leitfähigen Struktur (6), welche umfasst:
- ein Flachbandkabel (8) mit einem elektrisch leitfähigen Flachbandleiter (7), der an die elektrisch leitfähige Struktur (6) elektrisch angeschlossen ist,
- ein Rundkabel (13) mit einem elektrisch leitfähigen Rundleiter (12), der zur Formung einer Anschlusszone an den Flachbandleiter (7) elektrisch angeschlossen ist,
- ein Dichtmassenverbund (25) aus einer Mehrzahl miteinander verschmolzener Dichtmassenportionen (23, 24) einer selbstverschmelzenden Dichtmasse, in dem die Anschlusszone (19) so eingebettet ist, dass sie von der Umgebung luft- und wasserdicht abgeschirmt ist,
- ein den Dichtmassenverbund (25) umgebendes Anschlussgehäuse (22), wobei das Anschlussgehäuse (22) aus einer Mehrzahl miteinander verbundener Gehäuseteile (20, 21) aufgebaut ist, wobei in jedem Gehäuseteil (20, 21) eine mit wenigstens einer weiteren Dichtmassenportion (23, 24) eines anderen Gehäuseteils (20, 21) zum Dichtmassenverbund verschmolzene Dichtmassenportion enthalten ist, und wobei das Anschlussgehäuse (22) aus einem elastischen Material besteht.

8. Flächenkörper (1) mit wenigstens einem flächigen Substrat (3, 4) und wenigstens einer mit dem Substrat (3, 4) fest verbundenen, elektrisch leitfähigen Struktur (6), die mit einer Anschlussbaugruppe (2) nach Anspruch 7 elektrisch leitend verbunden ist.

## Claims

1. Method for producing a connection assembly (2) of a flat body (1), comprising the following steps:
- providing a flat body (1) having at least one flat substrate (3, 4) having at least one electrically conductive structure (6) which is fixedly connected to the substrate (3, 4), to which a flat strip conductor (7) of a flat ribbon cable (8) is electrically connected,
- electrically connecting a round conductor (12) of a round cable (13) to the flat strip conductor (7) which is electrically connected to the electrically conductive structure (6) for forming a connection zone (19),
**characterized by**
- embedding the connection zone (19) in a sealing mass composite (25) which is surrounded by a connection housing (22) for the air-and water-tight shielding of the connection zone (19) from the surroundings, wherein the sealing mass composite (25) is formed by bringing together and fusing a plurality of separate sealing mass portions (23, 24) of a self-fusing sealing compound,
wherein a sealing mass portion (23, 24) is respectively accommodated in housing parts (20, 21) of the connection housing (22) in such a way that the sealing mass portions (23, 24) in the assembled connection housing (22) can fuse to the sealing mass composite (25), wherein
the sealing mass portions (23, 24) in the housing parts (20, 21) are brought into contact with one another as a result of the exertion of an external mechanical force by elastic deformation of the connection housing (22).

2. Method according to claim 1, wherein the sealing mass portions (23, 24) are fused to one another at room temperature.

3. Method according to claim 1, wherein the sealing mass portions (23, 24) are fused to one another by heating, for example to a temperature above 100°C.

4. Method according to one of claims 1 to 3, wherein the sealing mass portions (23, 24) are fixedly connected to the connection housing (22) before the fusing to the sealing compound composite (25).

5. Method according to one of claims 1 to 4, in which a sheathing (9) of the flat ribbon cable (8) arranged in the connection housing (22) and a sheathing (14) of the round cable (13) arranged in the connection housing (22) are embedded in the sealing compound composite (25).

6. Method according to one of claims 1 to 5, in which the flat ribbon cable (8) and/or the connection housing (22) are fixed to the substrate (3, 4).

7. Connection assembly (2) of a flat body (1) having at least one flat substrate (3, 4) and at least one electrically conductive structure (6) which is fixedly connected to the substrate (3, 4), comprising:
- a flat ribbon cable (8) having an electrically conductive flat strip conductor (7) which is electrically connected to the electrically conductive structure (6),
- a round cable (13) having an electrically conductive round conductor (12) which is electrically connected to the flat strip conductor (7) for forming a connection zone,
- a sealing mass composite (25) made of a plurality of sealing mass portions (23, 24) of a self-fusing sealing compound which are fused with each other, in which the connection zone (19) is embedded in such a manner that it is shielded from the surroundings in an airtight and water-tight manner,
- a connection housing (22) surrounding the sealing mass composite (25), wherein the connection housing (22) is constructed from a plurality of housing parts (20, 21) which are connected to one another, wherein each housing part (20, 21) contains a sealing-mass portion which is fused to the sealing mass composite with at least one further sealing-mass portion (23. 24) of another housing part (20, 21), and wherein the connection housing (22) is made of an elastic material.

8. Flat body (1) having at least one flat substrate (3, 4) and at least one electrically conductive structure (6) which is fixedly connected to the substrate (3, 4) which is electrically conductively connected to a connection assembly (2) according to claim 7.

## Revendications

1. Procédure pour la fabrication d'un module de raccordement (2) d'une feuille (1), qui comprend les étapes suivantes :
- fourniture d'une feuille (1) avec au moins un substrat plat (3, 4) avec au moins une structure (6) électriquement conductrice fixée en permanence au substrat (3, 4), à laquelle un conducteur plat (7) d'un câble plat (8) est relié électriquement,
- raccordement électrique d'un conducteur rond (12) d'un câble rond (13) avec le conducteur plat (7) relié à la structure (6) électriquement conductrice pour former une zone de raccordement (19),
**caractérisée par**
- l'intégration de la zone de raccordement (19) dans une masse d'étanchéité composite (25) entourée d'un boîtier de raccordement (22) pour rendre la zone de raccordement (19) de l'environnement imperméable à l'air et à l'eau, où la masse d'étanchéité composite (25) est fabriquée en réunissant et en fusionnant une pluralité de portions de masse d'étanchéité (23, 24) séparées les unes des autres d'une masse d'étanchéité à autofusion, où respectivement dans des pièces d'un boîtier (20, 21) du boîtier de raccordement (22) une portion de la masse d'étanchéité, (23, 24) est accueillie de telle manière, que les portions de la masse d'étanchéité (23, 24) dans le boîtier de raccordement (22) composé peuvent fusionner en une masse d'étanchéité composite (25), où les portions de la masse d'étanchéité (23, 24) dans les pièces d'un boîtier (20, 21) sont mises en contact par la déformation élastique du boîtier de raccordement (22) résultant de l'application d'une force mécanique externe.

2. Procédure selon la revendication 1, dans laquelle les portions de la masse d'étanchéité (23, 24) sont fusionnées ensemble à la température ambiante.

3. Procédure selon la revendication 1, dans laquelle les portions de la masse d'étanchéité (23, 24) sont fusionnées ensemble par chauffage, par exemple à une température supérieure à 100° C.

4. Procédure selon l'une des revendications 1 à 3, dans laquelle avant d'être fusionné en masse d'étanchéité composite (25) les portions de la masse d'étanchéité (23, 24) sont fermement attachées sur le boîtier de raccordement (22).

5. Procédure selon l'une des revendications I à 4, dans laquelle une gaine (9) du câble plat (8) disposée dans le boîtier de raccordement (22) et une gaine (14) du câble rond (13) disposée dans le boîtier de raccordement (22) espacés du câble rond disposée est incorporé dans la masse d'étanchéité composite (25).

6. Procédure selon l'une des revendications 1 à 5, où le câble plat (8) et/ou le boîtier de raccordement (22) est attachée sur le substrat (3, 4).

7. Module de raccordement (2) d'une feuille (1) avec au moins un substrat plat (3, 4) et au moins une structure électriquement conductrice (6) fixé en permanence au substrat (3, 4), qui comprend :
- un câble plat (8) avec un conducteur plat électriquement conducteur (7), qui est relié électriquement à la structure électriquement conductrice (6),
- un câble rond (13) avec un conducteur rond électriquement conducteur (12), qui est relié électriquement au conducteur plat (7) pour former une zone de raccordement,
- une masse d'étanchéité composite (25) formée à partir d'une pluralité de portions de masse d'étanchéité (23, 24) fusionnées entre elles d'une masse d'étanchéité à autofusion, dans laquelle la zone de raccordement (19) est intégrée de manière à être imperméable à l'air et à l'eau de l'environnement,
- un boîtier de raccordement (22) entourant la masse d'étanchéité composite (25), où le boîtier de raccordement (22) est construit à partir d'une pluralité de pièces de boîtier de logement (20, 21) interconnectées, où dans chaque pièce d'un boîtier (20, 21) est contenue une portion de masse d'étanchéité (23, 24) fondue avec au moins une autre portion de masse d'étanchéité d'une autre pièce d'un boîtier (20, 21), et où le boîtier de raccordement (22) est fait d'un matériau élastique.

8. Feuille (1) avec au moins un substrat plat (3, 4) et avec au moins une structure électriquement conductrice fixée en permanence au substrat (6), qui est reliée de manière électriquement conductrice avec un module de raccordement (2) selon la revendication 7.
